## Europäisches Patentamt
## European Patent Office
## Office européen des brevets

(11) Publication number: **0 113 927**
**B1**

(12)
# EUROPEAN PATENT SPECIFICATION

(45) Date of publication of patent specification: **22.04.87**

(51) Int. Cl.⁴: **A 21 C 9/04, A 23 P 1/00**

(21) Application number: **83200042.6**

(22) Date of filing: **12.01.83**

(54) **Device for covering foodstuff with granular and/or powdery material.**

(43) Date of publication of application:
**25.07.84 Bulletin 84/30**

(45) Publication of the grant of the patent:
**22.04.87 Bulletin 87/17**

(84) Designated Contracting States:
**AT BE CH DE FR GB IT LI LU SE**

(56) References cited:
**EP-A-0 046 159**
**US-A-3 468 691**
**US-A-3 771 696**
**US-A-4 128 074**
**US-A-4 248 173**

(73) Proprietor: **Koppens Machinefabriek B.V.**
**Beekakker 11**
**NL-5761 EN Bakel (NL)**

(72) Inventor: **Koppens, Wilhelmus Franciscus**
**Antonius**
**Hoekendaal 12**
**NL-5671 CK Bakel (NL)**

(74) Representative: **Noz, Franciscus Xaverius, Ir.**
**et al**
**Boschdijk 155 P.O. Box 645**
**NL-5600 AP Eindhoven (NL)**

## Description

The invention relates to a device for covering foodstuff with granular and/or powdery material comprising a frame, a bunker supported by said frame for receiving a supply of granular and/or powdery material an endless belt for displacing the foodstuff with the aid of the upper run of the belt along a path extending below an outlet port of the bunker, said upper run of the belt moving by at least part of its length near the outlet port over a closed plate, whereby below the outlet port a sieve plate is arranged, said sieve plate being downwardly inclined away from its end located near the outlet port of the bunker in a direction opposite to the intended direction of displacement of the foodstuff, the sieve plate being provided with a plurality of elongated openings lying one behind the other and extending transversely to the intended direction of displacement of the foodstuff.

Such a device is known from EP—A—0046159. In said known structure the bunker has two outlet parts, a first outlet part downstreams of the position where during operation foodstuff will be deposited on the upper run of the belt and a second outlet part upstreams of said position. In the bunker structure there has been made a passage way for a conveyor for supplying the foodstuff towards said position and for depositing said foodstuff on a lower layer of granular and/or powdery material formed at said first outlet part. All the granular and/or powdery material falling from the rear end of the belt can be conveyed towards the bunker by means of a recovery mechanism. Said known structure is quite complicate.

Now according to the invention the belt is pervious and allows a part of the granular and/or powdery material to drop down through the upper run to the lower run and at least a part of the lower run of said belt situated below said closed plate is moving over a further closed plate joining a wall of a chamber located near the front end of the endless belt where the foodstuff is fed to the belt, said chamber accommodating a rotor having flexible rotor blades, that arrangement being such that granular and/or powdery material supplied to the chamber by the lower run of the belt can be moved by the flexible rotor blades along an upwardly curved plate of said chamber towards the front end of the upper run of the belt.

By using the structure according to the invention at least part of the excess of granular and/or powdery material falling from the rear end of the plate through the upper run of the belt is directly returned to the front end of the belt by conveying said material below the lower run towards said front end. Thereby said material will form a lower layer of granular and/or powdery material on the upper run of the conveyor so that an outlet part of the bunker for forming such a lower layer can be omitted and the foodstuff can be supplied directly to the front end of the belt. In this way there can be obtained a simple structure.

In practice it has been found also that by using such a construction fragmentation of coarse grains is avoided to an appreciable extent as at least part of the granular material is displaced over smaller distances.

According to a further aspect of the invention fragmentation of the coarse grains can be effectively counteracted further by dividing the bunker into two compartments separated from one another near the lower side of the bunker by a pivotable flap.

In one compartment a given stock of the material can be stored, whereas the material utilized during operation flows through the other compartment. When the supply of material in the compartment passing the stream drops below a given value, the pivotable flap will automatically open under the action of the weight of the material in the other compartment so that automatic supplementation of the material flowing out during operation is obtained.

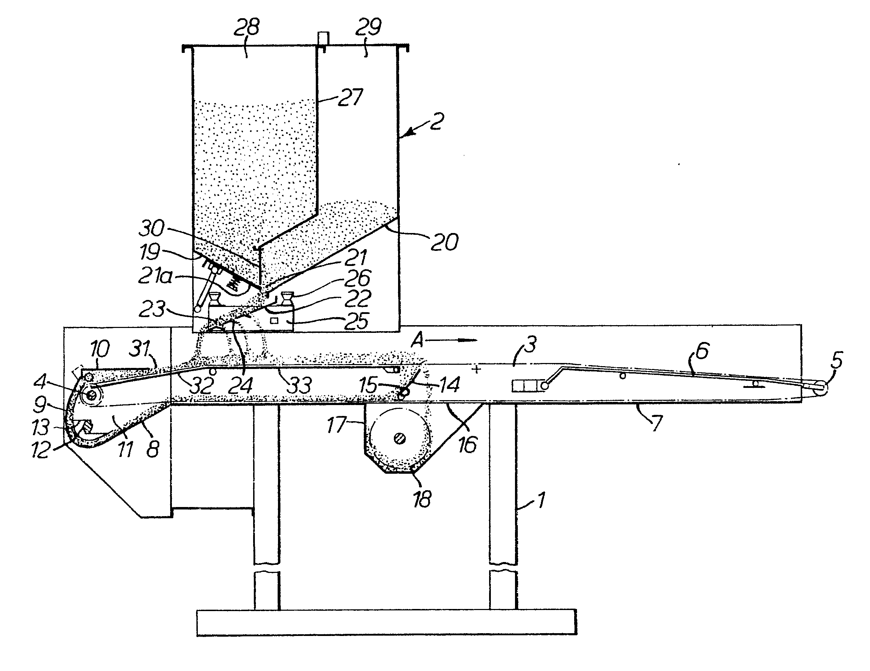

The invention will be described more fully hereinafter with reference to an embodiment of a device in accordance with the invention shown schematically in the accompanying Figure partly in a cross-sectional view.

The device shown in the Figure comprises a frame 1 supporting a bunker 2 and an endless conveyor belt 3. The pervious conveyor belt 3 is preferably composed of pivotally coupled bars extending in the longitudinal and transverse directions of the belt. Near one end the conveyor belt is supported by a drivable shaft 4 and near the other end by a guide roller 5. A portion of the upper run of the conveyor belt extending away from the shaft 4 passes along a closed plate 33, which is first slightly inclined upwards away from the shaft 4 and goes over subsequently into a horizontal part. The portion of the upper run of the belt adjoining the roller 5 is furthermore supported by a grid-shaped member 6. The lower run of the conveyor belt 3 is supported by a horizontal plate 7. At a given distance from the shaft 4 this plate goes over into a downwardly inclined plate 8, which establishes a connection between the plate 7 and an upwardly curved plate 9, the upper edge of which is located at a given distance above the shaft 4. The upwardly inclined part of the upper run of the conveyor belt 3 is partly covered by a horizontal plate 10 located at a given distance above the upper run.

The chamber 11 bounded by the plates 8 and 9 and located below the part of the lower run of the belt 3 adjoining the shaft 4 is equipped with a rotor comprising a shaft 12 extending parallel to the shaft 4 and blades 13 of slightly elastic material fastened to said shaft. The shaft 12 can be·rotated in clockwise direction with the aid of driving means (not shown). The shaft 4 can be rotated so that during operation the upper run of the belt 3 is displaced in the direction of the arrow A.

Viewed in said direction of displacement indicated by the arrow A a flap 14 is arranged near the rear end of the plate 33 below the upper run of the belt 3, said flap being adjustable about a shaft 15 arranged near the lower edge of the flap and extending transversely of the intended direction of displacement of the conveyor belt.

The part of the bottom plate 7 located in front of the shaft 15 as viewed in the direction A has a passage 16 giving access to a gutter 17 arranged below the plate 7 and accommodating a worm 18 extending transversely of the longitudinal direction of the gutter and being rotatable with the aid of driving means (not shown in detail).

It will furthermore be apparent from the Figure that the bottom of the bunker 2 has a slightly funnel-like shape and the edges of two downwardly inclined, converging bottom plates 19 and 20 of the bunker determine an outlet port 21. The size of the passage of this outlet port can be set with the aid of a slide 21a, which is slidable along the bottom plate 19 and can be set in a plurality of positions.

Below the outlet port 21 is arranged a sieve plate 22, which is downwardly inclined away from its end near the outlet port in a direction opposite the direction of displacement of the upper run of the belt 3 indicated by the arrow A. The sieve plate has a few elongate holes 23 extending at least substantially parallel to and transversely of the direction of displacement of the belt 3. Viewed in the direction of the arrow A downwardly and forwardly inclined guide strips 24 located below the plate 22 adjoin the front edges of said elongate holes, said strips being integral with the plate 22. The sieve plate may, as an alternative, be formed by a perforated plate.

The sieve plate 22 is supported by a vibrating device 25, which is coupled with the frame with the aid of elastic suspension members 26.

From the Figure it will furthermore be apparent that the bunker 2 is divided with the aid of a partition 27 into two compartments 28 and 29 so that the capacity of compartment 28 is considerably greater than that of compartment 29.

At the lower edge of the partition 27 hangs a flap 30 of slightly resilient material, which hangs freely from the lower edge of the partition 27 so that in the normal position in which the flap 30 extends vertically the lower edge of the flap 30, as viewed in the Figure, is located at the level of the left-hand boundary edge of the opening 21 so that the flap 30, so to say, separates the compartment 28 from the outlet port 21.

The gutter 17 communicates through a duct (not shown in detail) in which conveying means are accommodated, with the upper part of the compartment 29 of the bunker 2.

In operation the endless conveyor belt 3 is moved so that the upper run of the belt travels in the direction of the arrow A, whilst the shaft 12 is rotated in clockwise direction and the sieve plate 22 is caused to vibrate with the aid of the vibratory device 25. The foodstuff to be processed such as croquettes, chicken legs or the like provided with a slightly adhesive coating, for example a white-of-egg layer are placed with the aid of transport means (not shown) in the proximity of point 31 on a layer of bread crumbs lying on the upper run of the conveyor belt 3 so that these foodstuffs together with the layer of bread crumbs 32 on the conveyor belt are displaced in the direction of the arrow A. At the same time bread crumbs are flowing out of the compartment 29 through the outlet port 21 onto the vibrating sieve plate 22. When the bread crumbs move along the sieve plate 22 in a direction at least substantially opposite to the direction of movement of the foodstuff indicated by the arrow A, the fine constituents of the bread crumbs tend to flow away through the passages 23 in the sieve plate, whereas the coarse constituents travel as far as beyond the end of the sieve plate and subsequently drop down. It will be obvious that in this way the foodstuff displaced with the aid of the conveyor belt 3 in the direction of the arrow A will be contacted first by the coarse constituents of the bread crumbs and only then by the fine material flowing through the passages 23 of the sieve plate 22. Since the coarse constituents are first to come into contact with the objects to be covered, they can effectively adhere to these objects, whilst any free space left between these coarse constituents on the foodstuff can be filled up with the fine constituents of the bread crumbs arriving later.

The objects thus covered with bread crumbs are further displaced in the direction of the arrow A together with the bread crumbs. When the rear end of the plate 33 is reached, the bread crumbs will drop down through the pervious belt 3 so that only the objects covered with bread crumbs will be delivered by the belt 3 in the direction towards the roller 5, where the objects can be passed on to a packing machine or a further transport member or the like.

The bread crumbs passing across the belt 3 near the rear end of the plate 33 are divided, as is indicated in the Figure, into two streams, i.e. a first stream passing through the opening 16 to the gutter 17 and a second stream arriving, viewed in the direction of the arrow A, at the part of the bottom plate 7 located in front of the flap 14. The ratio between these two streams can be adjusted at will be setting the position of the flap 14.

The material flowing into the gutter 17 will be supplied with the aid of the worm 18 to the end of the gutter which communicates through the transport duct (not shown) with the top end of the compartment 29 of the bunker 2 so that this material is again fed to the compartment 29 of the bunker 2.

The bread crumbs falling on the plate 7 are carried along by the lower run of the belt 3 moving along said plate in the direction towards the chamber 11 located below the front end of the lower run of the belt 3. From this chamber 11 the material is slung upwards with the aid of the rotating blades 13 along the guide wall 9 and arrives at the front end of the upper run of the conveyor belt 3, where a layer of bread crumbs is formed which is moved along by this upper run of the belt 3. Since the bread crumbs are conducted to the chamber 11 at a given distance in front of the point where the lower run is going over to the upper run and are subsequently thrown up by the blades 13, a gradual displacement of the bread crumbs is obtained so that fragmentation of the coarse constituents of the bread crumbs is avoided as far as possible.

The material supplied from the gutter 17 to the compartment 29 can again flow away through the outlet port 21. When the level of the material in the compartment 29 becomes too low, the flap 30 will slightly deflect under the action of the weight of the material located in the stock compartment 28 so that material can flow from the compartment 28 towards the outlet port. When the level of the material in the compartment 29 thus rises, the flap 30 is urged back. It can thus be ensured that always a relatively small amount of the material contained in the bunker is circulating, which also counteracts an undesirable diminution of the circulating material.

## Claims

1. A device for covering foodstuff with granular and/or powdery material comprising a frame (11), a bunker (2) supported by said frame, receiving a supply of granular and/or powdery material, an endless belt (3) for displacing the foodstuff with the aid of the upper run of the belt (3) along a path extending below an outlet port (21) of the bunker (2), said upper run of the belt (3) moving by at least part of its length near the outlet port over a closed plate (33), whereby below the outlet port (21) a sieve plate (22) is arranged, said sieve plate being downwardly inclined away from its end located near the outlet port of the bunker in a direction opposite to the intended direction of displacement of the foodstuff, the sieve plate (22) being provided with a plurality of elongated openings (23) lying one behind the other and extending transversely to the intended direction of displacement of the foodstuff characterised in that the belt (3) is pervious and thus allows a part of the granular and/or powdery material to drop down through the upper run to the lower run and in that at least a part of the lower run of said belt (3) situated below said closed plate (33) is moving over a further closed plate (7) joining a wall of a chamber (11) located near the end of the endless belt (3) where the foodstuff is fed to the belt (3), said chamber (11) accommodating a rotor (12) having flexible rotor blades (13), the arrangement being such that granular and/or powdery material supplied to the chamber (11) by the lower run of the belt (3) can be moved by the flexible rotor blades (13) along an upwardly curved plate (9) of said chamber (11) towards the front end of the upper run of the belt (3).

2. A device as claimed in claim 1 characterized in that near the rear end of the plate (33) supporting the upper run of the belt (3) a control-flap (14) is arranged below the upper run of the belt (3) for dividing the stream of material passing through the upper run into two parts in a manner such that one part arrives at the plate (7) supporting the lower run of the belt and the other part arrives at a gutter (17) disposed below the plate (7) supporting the lower run.

3. A device as claimed in claim 1 or 2, characterized in that the bunker (2) is divided into two compartments (28, 29), which are separated from one another by a deflectable flap (30) near the underside of the bunker.

4. A device as claimed in claim 3, characterized in that the flap (30) is formed by a flexible plate hanging down from the lower edge of the partition (27) dividing the bunker (2) into two compartments (28, 29), the free lower end of the plate being located near the outlet port (21) of the bunker in a manner such that the compartment of a lower capacity (29) is in open communication with the outlet port (21) and the other compartment (28) is separated from the outlet port (21) by said flap (30).

5. A device as claimed in claim 2 and 4, characterized in that the gutter (17) located below the plate (7) supporting the lower run of the belt (3) communicates with the smaller compartment (29) of the bunker (2) through members accommodating transport means for the material.

## Patentansprüche

1. Einrichtung zum Bestreuen von Nahrungsmitteln mit pulverförmigen und/oder körnigen Stoffen mit einem Rahmen (11), einem vom Rahmen getragenen Vorratsbehälter (2) zur Aufnahme eines Vorrats der pulverförmigen und/oder körnigen Stoffes, einem endlosen Band (3) zur Bewegung der Nahrungsmittel mit Hilfe des oberen Trums des Bandes (3) längs einer sich unter einer Auslaßöffnung (21) des Vorratsbehälters (2) erstreckenden Bahn, wobei sich der obere Trum des Bandes (3) mit wenigstens einem Teil seiner Länge in der Nähe der Auslassöffnung über eine geschlossene Platte (33) bewegt und unter der Auslaßöffnung (21) eine Siebplatte (22) angeordnet ist, die von ihrem in der Nähe der Auslaßöffnung angeordneten Ende weg in entgegengesetzter Richtung zur beabsichtigten Bewegungsrichtung der Nahrungsmittel nach unten geneigt ist und mehrere längliche, hintereinanderliegende und sich quer zur beabsichtigten Bewegungsrichtung der Nahrungsmittel erstreckende Öffnungen (23) aufweist, dadurch gekennzeichnet, daß das Band (3) durchlässig ist und somit gestattet, daß ein Teil des pulverförmigen und/oder körnigen Stoffes durch den oberen Trum zum unteren Trum fällt, und daß mindestens ein Teil des unteren, sich unter der geschlossenen Platte (33) befindlichen Trums des Bandes (3) sich über eine weitere geschlossene Platte (7), die an eine Wand einer Kammer (11) anschließt, bewegt, wobei die Kammer (11) in der Nähe des Endes des endlosen Bandes (3) angeordnet ist, wo die Nahrungsmittel dem Band (3) zugeführt werden, und daß die Kammer (11) einen Rotor (12) mit flexiblen Rotorblättern (13) aufnimmt, so daß mit der Anordnung die der Kammer (11) mittels des unteren Trums des Bandes (3) zugeführten pulverförmigen und/oder körnigen Stoffe durch die flexiblen Rotorblätter (13) längs einer nach oben gekrümmten Platte (9) der Kammer (11) in Richtung des vorderen Endes des oberen Trums des Bandes (3) bewegt werden können.

2. Einrichtung nach Anspruch 1, dadurch gekennzeichnet, daß in der Nähe des hinteren Endes der den oberen Trum des Bandes (3) tragenden Platte (33) eine Steuerklappe (14) unter dem oberen Trum des Bandes (3) zur Aufteilung der durch den oberen Trum fallenden Stoffe in zwei Teile angeordnet ist, und zwar so, daß ein Teil auf die den unteren Trum des Bandes (3) tragende Platte (7) und der andere Teil in eine unter der den unteren Trum tragenden Platte (7) angeordnete Rinne (17) gelangt.

3. Einrichtung nach Anspruch 1 oder 2, dadurch gekennzeichnet, daß der Vorratsbehälter (2) in zwei Kammern (28, 29) unterteilt ist, die voneinander durch eine verbiegbare Klappe (30) in der Nähe der Unterseite des Vorratsbehälters getrennt sind.

4. Einrichtung nach Anspruch 3, dadurch gekennzeichnet, daß die Klappe (30) als flexible Platte ausgebildet ist, die von der Unterkante der den Vorratsbehälter (2) in zwei Kammern (28, 29) trennenden Trennwand (27) nach unten hängt, wobei das untere freie Ende der Platte in der Nähe der Auslaßöffnung (21) des Vorratsbehälters so angeordnet ist, daß die Kammer geringerer Kapazität (29) mit der Auslaßöffnung (21) in offener Verbindung steht und die andere Kammer (28) von der Auslaßöffnung (21) durch die Klappe (39) abgetrennt ist.

5. Einrichtung nach Anspruch 2 und 4, dadurch gekennzeichnet, daß die unter der den unteren Trum des Bandes (3) tragenden Platte (7) angeordnete Rinne (17) mit der kleineren Kammer (29) des Vorratsbehälters (2) durch Fördereinrichtungen für den Stoff aufnehmende Teile verbunden ist.

**Revendications**

1. Appareil pour recouvrir des produits alimentaires avec des matières granuleuses et/ou poudreuses, comportant un bâti (11), une trémie (2) supportée par ledit bâti et recevant une arrivée de matières granuleuses et/ou poudreuses, un tapis sans fin (3) pour déplacer les produits alimentaires à l'aide du brin supérieur du tapis (3) le long d'un chemin qui s'étend sous un orifice de sortie (21) de la trémie (2), ledit brin supérieur du tapis (3) se déplaçant, sur au moins une partie de sa longueur proche de l'orifice de sortie, sur une plaque pleine (33), étant précisé que sous l'orifice· de sortie (21) est disposée une plaque de tamisage (22), ladite plaque de tamisage étant inclinée vers le bas en s'éloignant de son extrémité proche de l'orifice de sortie de la trémie dans la direction opposée à la direction prévue du déplacement des produits alimentaires, la plaque de tamisage (22) comportant une pluralité d'ouvertures allongées (23) qui sont situées l'une derrière l'autre et qui s'étendent transversalement à la direction prévue du déplacement des produits alimentaires, caractérisé en ce que le tapis (3) est perméable, et permet donc à une partie des matières granuleuses et/ou poudreuses de tomber, à travers le brin supérieur, sur le brin inférieur; et en ce qu'au moins une partie du brin inférieur dudit tapis (3) située sous ladite plaque pleine (33) se déplace sur une autre plaque pleine (7) qui rejoint une paroi d'une chambre (11) située près de l'extrémité du tapis sans fin (3) où les produits alimentaires arrivent sur le tapis (3), ladite chambre (11) logeant un rotor (12) qui présente des ailettes de rotor flexibles (13), la disposition étant telle que les matières granuleuses et/ou poudreuses amenées dans la chambre (11) par le brin inférieur du tapis (3) peuvent être déplacées, par les ailettes de rotor flexibles (13), le long d'une plaque incurvée vers le haut (9) de ladite chambre (11) en direction de l'extrémité avant du brin supérieur du tapis (3).

2. Appareil selon la revendication 1, caractérisé en ce que, près de l'extrémité arrière de la plaque (33) qui supporte le brin supérieur du tapis (3), un volet de commande (14) est disposé sous le brin supérieur du tapis (3) pour diviser le flux de matières passant à travers le brin supérieur en deux parties, de façon telle que l'une des parties arrive sur la plaque (7) qui supporte le brin inférieur du tapis, et que l'autre partie arrive à une rigole (17) disposée sous la plaque (7) qui supporte le brin inférieur.

3. Appareil selon la revendication 1 ou 2, caractérisé en ce que la trémie (2) est divisée en deux compartiments (28, 29) qui sont séparés l'un de l'autre par un volet (30), que l'on peut dévier et qui est situé près de la face inférieure de la trémie.

4. Appareil selon la revendication 3, caractérisé en ce que le volet (30) est constitué d'une plaque flexible suspendue au bord inférieur de la cloison (27), qui divise la trémie (2) en deux compartiments (28, 29), l'extrémité inférieure libre de la plaque étant située près de l'orifice de sortie (21) de la trémie de façon telle que le compartiment de moindre capacité (29) est en communication libre avec l'orifice de sortie (21) et que l'autre compartiment (28) est séparé d'avec l'orifice de sortie (21) par ledit volet (30).

5. Appareil selon les revendication 2 et 4, caractérisé en ce que la rigole (17) située sous la plaque (7) qui supporte le brin inférieur du tapis (3) communique avec le plus petit compartiment (29) de la trémie (2) par l'intermédiaire d'éléments qui logent des moyens de transport pour les matières.